# EUROPEAN PATENT APPLICATION

(11) **EP 2 768 110 A1**
(43) Date of publication of application: **20.08.2014**
(21) Application number: 14152511.3
(22) Date of filing: 24.01.2014
(51) Int. Cl.: H02J 7/00

(54) **Battery charging system**

(30) Priority: 15.02.2013 US 201313769063
(71) Applicant: Hamilton Sundstrand Corporation, Windsor Locks, CT 06096-1010 (US)
(72) Inventor: Krenz, Michael, Roscoe, IL Illinois 61073 (US); Readio, Philip, Phoenix, AZ Arizona 85041 (US)
(74) Representative: Hughes, Andrea Michelle

(57) **Abstract**

A battery charging system comprises a battery charger, a first battery 14a, a second battery 14b connected in series with the first battery, and first and second voltage regulation circuits 16a, 16b. The battery charger provides a charging output to the series-connected and second batteries. The first voltage regulation circuit is connected in parallel with the first battery and provides a first conductive current path that bypasses the first battery in response to a voltage across the first battery exceeding a threshold value. A second voltage regulation circuit is connected in parallel with the second battery and provides a second conductive current path that bypasses the second battery in response to a voltage across the second battery exceeding a threshold value.

## Description

### BACKGROUND

The present invention is related to battery systems, and in particular to battery charging systems.

Battery systems are typically comprised of a plurality of individual batteries (sometimes referred to as "battery cells") connected either in parallel or in series with one another to provide a desired output to a load. Placing the plurality of battery cells in series with one another allows the system to supply loads with higher output voltages and is therefore desirable in many applications.

Connecting batteries in series has a number of benefits over parallel connected batteries during discharge, but presents a number of challenges during charging operations. For example, each battery cell may be characterized by a different source impedance. As a result, the charging voltage applied to the stack of series-connected battery cells may be unevenly distributed across each of the plurality of battery cells, resulting in each battery cell being exposed to a different charging voltage. As a result, some battery cells may be subject to overvoltage conditions, while others do not receive a charging voltage sufficient to fully charge the battery cell.

### SUMMARY

A battery charging system comprises a battery charger, a first battery, a second battery connected in series with the first battery, and first and second voltage regulation circuits. The battery charger provides a charging output to the series-connected first and second batteries. The first voltage regulation circuit is connected in parallel with the first battery and provides a first conductive current path that bypasses the first battery in response to a voltage across the first battery exceeding a threshold value. A second voltage regulation circuit is connected in parallel with the second battery and provides a second conductive current path that bypasses the second battery in response to a voltage across the second battery exceeding a threshold value.

### BRIEF DESCRIPTION OF THE DRAWINGS

FIG. 1 is a circuit diagram of a battery charging system according to an embodiment of the present invention.
FIG. 2 is a flowchart describing steps performed by the battery charging system according to an embodiment of the present invention.
FIG. 3 is a circuit diagram of a battery charging system according to an embodiment of the present invention.

### DETAILED DESCRIPTION

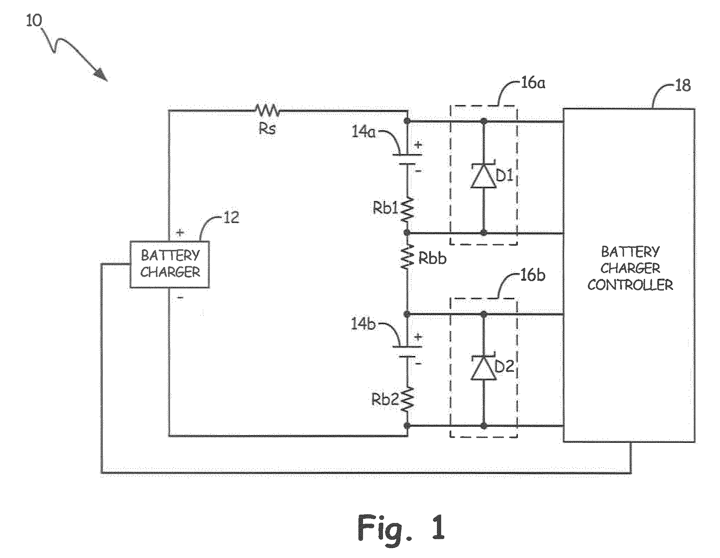

FIG. 1 is a circuit diagram of battery charging system 10 according to an embodiment of the present invention. Battery charging system 10 includes battery charger 12, batteries 14a and 14b, voltage regulation circuits 16a and 16b, and battery charger controller 18. Line impedance between battery charger 12 and batteries 14a and 14b is characterized by resistor Rs. Similarly, source impedances of batteries 14a and 14b are characterized by resistors Rb1 and Rb2, and bus bar impedance between batteries 14a and 14b is characterized by resistor Rbb. Batteries 14a and 14b are connected in series with battery charger 12 and with one another. Voltage regulation circuits 16a and 16b are connected in parallel with batteries 14a and 14b, respectively. Battery charger controller 18 is connected to monitor the voltage across battery 14a and across battery 14b, respectively. Although in the embodiment shown in FIG. 1, only two batteries 14a and 14b are included, in other embodiments a plurality of batteries may be employed, each with a respective voltage regulation circuit connected in parallel with the battery.

Battery charger 12 is connected in series with batteries 14a and 14b to provide a charging voltage to batteries 14a and 14b. The charging voltage required depends on the number of series-connected batteries and the rated voltage of the batteries. For example, if batteries 14a and 14b are each 12 Volt (V) batteries, then battery charger 12 would need to provide a 24V charging voltage in order to fully charge both batteries. As discussed above, however, variation in the source impedances Rb1 and Rb2 of each respective battery 14a and 14b may result in variations in the voltage applied across each battery. In some instances, this may result in an overvoltage being applied to either battery 14a or 14b.

Voltage regulation circuits 16a and 16b are connected in parallel with batteries 14a and 14b, respectively, to regulate the voltage provided to batteries 14a and 14b. Because voltage regulation circuits 16a and 16b are connected in parallel with batteries 14a and 14b, respectively, the voltage applied to the batteries will be the same voltage applied to the voltage regulation circuits. For example, with respect to battery 14a and voltage regulation circuit 16a, the voltage applied to battery 14a is also applied across voltage regulation circuit 16a. If the voltage applied across battery 14a is less than an overvoltage threshold then voltage regulation circuit 16a remains non-conductive and charging current provided by battery charger 12 is applied to battery 14a and then to battery 14b. However, if the voltage across battery 14a exceeds an overvoltage threshold then voltage regulation circuit 16a creates a conductive current path that bypasses battery 14a, thereby decreasing the voltage across battery 14a. In this way, voltage regulation circuits 16a and 16b regulate the voltage applied to batteries 14a and 14b respectively. Importantly, the charging voltage supplied by battery charger 12 remains unchanged regardless of the state of voltage regulation circuits 16a and 16b, such that the full charging potential of battery charger is applied to remaining battery 14b without overcharging battery 14a.

In the embodiment shown in FIG. 1, voltage regulation circuit 16a is implemented with a Zener diode D1 connected in parallel across battery 14a. The cathode of Zener diode D1 is connected to the positive terminal of battery 14a and the anode of Zener diode D1 is connected to the negative terminal of battery 14a, such that Zener diode D1 remains reverse biased during charging of battery 14a. The circuit path through Zener diode D1 is non-conductive so long as the voltage applied across battery 14a does not exceed the breakdown voltage of Zener diode D1. If the breakdown voltage of Zener diode D 1 is exceeded then the diode conducts, providing a conductive path that bypasses battery 14a. The breakdown voltage of Zener diode D 1 is selected based on the overvoltage threshold of battery 14a, such that a conductive path is formed through Zener diode D1 before battery 14a is damaged. For example, if battery 14a is a 12V battery with an overvoltage threshold of 12.5V, then Zener diode D1 is selected to have a breakdown voltage of approximately or just less than 12.5V. Zener diode D2 is similarly connected in parallel across battery 14b such that an overvoltage applied across battery 14b results in the breakdown of Zener diode D2 to create a current path that bypasses battery 14b.

In addition to selection of breakdown voltages associated with Zener diodes D1 and D2, the diodes and associated wiring are sized to handle the full capacity of current supplied by battery charger 12. That is, voltage regulation circuits 16a and 16b are not merely monitoring circuits that are not likely to be required to handle the full charging current associated with battery charger 12. Rather, voltage regulation circuits 16a and 16b are expected during normal operation to create conductive bypass paths around batteries 14a or 14b through which a maximum current associated with battery charger 12 may flow. In some embodiments, battery charge controller 18 detects when each of the batteries 14a and 14b are fully charged, either by directly monitoring the voltage across each battery or the voltage across the entire stack of batteries (depending on the type of load). In response to a determination that all batteries have been fully charged, battery charge controller 18 may stop the charging operation. However, in other embodiments, battery charger 12 may remain On in a float-charge mode in which substantially all of the current supplied by battery charger 12 flows through Zener diodes D1 and D2. In one embodiment, battery charger 12 is current-limited (i.e., will not supply a current above a threshold level), and Zener diodes D1 and D2 are sized to handle the maximum current level that may be supplied by battery charger 12.

In the embodiment shown in FIG. 1, no resistive elements are connected in series with Zener diodes D1 and D2, respectively. It is beneficial to minimize the power consumed by voltage regulating circuits 16a and 16b. In other embodiments, Zener diode D1 or Zener diode D2 may be replaced by a plurality of Zener diodes connected in series with one another to create the desired breakdown voltage and satisfy the maximum charging current requirements.

In contrast with approaches in which a detected overvoltage condition across one battery or battery cell results in the voltage supplied by the battery charger being decreased, the embodiment shown in FIG. 1 does not rely on modifying the voltage supplied by battery charger 12. Maintaining the voltage of battery charger 12 at a desired or maximum value and utilizing voltage regulation circuits 16a and 16b to create bypass paths allows other batteries to receive the full charging current capacity of battery charger 12. A benefit of this approach is that charging current shunted around a particular battery to prevent an overvoltage condition is not wasted, but is supplied to the remaining battery or batteries to allow those batteries to be fully charged.

Battery charger controller 18 is responsible for detecting faults in voltage regulation circuits 16a and 16b and in response to a detected fault taking action to protect batteries 14a and 14b. In addition, battery charger controller 18 may be responsible for determining when the batteries are fully charged, such that battery charger 12 can be turned Off. In the embodiment shown in FIG. 1, battery charger controller 18 detects faults and/or determines charge levels of the battery based on the voltage monitored across each of the plurality of batteries 14a and 14b.

During normal charging operations, voltage regulation circuits 16a and 16b are responsible for regulating the voltage across respective batteries 14a and 14b to prevent overvoltage conditions. However, a fault condition associated with either voltage regulation circuit 16a or 16b could result in an overvoltage being applied to one or both batteries 14a or 14b. For example, if Zener diode D1 is damaged and does conduct at the expected breakdown voltage then an overvoltage may be applied to battery 14a. This fault condition is detected by battery charger controller 18 if the monitored voltage across battery 14a increases above the breakdown voltage of Zener diode D1. Based on a detected fault condition, battery charger controller 18 operates in a fault protection mode in which batteries 14a and 14b are protected by either reducing the voltage supplied by battery charger 12 or turning Off battery charger 12 altogether. Battery charger controller 18 may also store information related to the detected fault, including the voltage regulation circuit in which the fault occurred to accommodate repair and/or replacement of the faulty circuit.

Although separate from the fault protection functions provided by battery charger controller 18, the controller may also be utilized to determine when the batteries have been fully charged such that the charging operation can be ended. There are a number of methods by which battery charger controller 18 may determine whether the charging operation is complete. In one embodiment, battery charger controller 18 compares monitored voltages from across each battery to a threshold value to determine whether each of the plurality of batteries 14a and 14b are fully charged. In another embodiment, battery charger controller 18 monitors the voltage across the entire stack of batteries to determine whether the charging operation is complete. If battery charger controller 18 determines that the charging operation is complete, then battery charger controller 18 instructs battery charger 12 to stop charging.

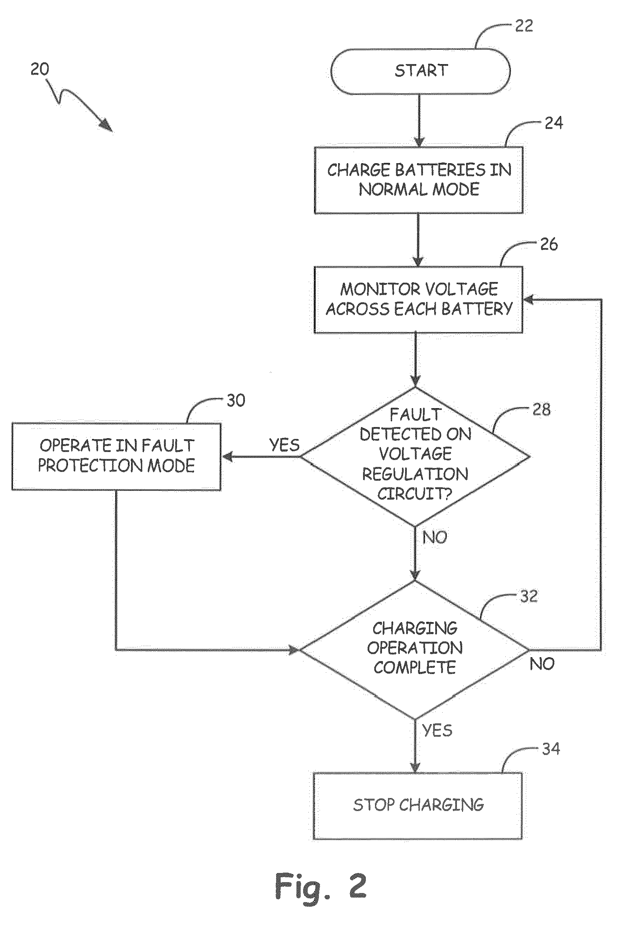

FIG. 2 is a flowchart illustrating steps performed by battery charging system 10 according to an embodiment of the present invention. The embodiment shown in FIG. 2 is described with reference to battery charging system 10 described with respect to FIG. 1.

At step 24, battery charging system 10 operates in a normal operating mode in which battery charger 12 provides a full output voltage to begin charging batteries 14a and 14b and voltage regulation circuits 16a and 16b regulate the voltage supplied to prevent overvoltage conditions. During normal operation, battery charger controller 18 is not responsible for regulating the voltage across batteries 14a and 14b or regulating the output voltage supplied by battery charger 12. Rather, voltage regulating circuits 16a and 16b individually regulate the voltage across respective batteries 14a and 14b by creating conductive paths bypassing respective batteries 14a and 14b as required to maintain the voltage across each battery below an overvoltage threshold value.

At step 26, battery charge controller 18 monitors the voltage across each of the plurality of batteries 14a and 14b. At step 28, battery charger controller 18 determines whether a fault condition exists with respect to any of the voltage monitoring circuits based on whether one or more of the monitored voltages exceeds an overvoltage threshold value. A monitored voltage that exceeds the overvoltage threshold value indicates that the corresponding voltage regulation circuit has experienced a fault condition (e.g., Zener diode is "popped" open, and cannot create a conductive path).

If a fault is detected at step 28, then at step 30 battery charger controller 18 operates in a fault protection mode. In one embodiment, operation in the fault protection mode includes decreasing the voltage provided by battery charger 12 to prevent the fault condition from causing an overcharging of the battery associated with the detected fault. If no fault condition is detected at step 28, then at step 32 battery charger controller determines whether the charging operation is complete. As discussed above, battery charger controller may make this determination based on the voltages monitored across each of the plurality of batteries 14a and 14b, voltage monitored across the entire stack of battery cells, or based on other well-known methods. In one embodiment, this includes comparing the monitored voltages to a charge complete value to determine whether each of the plurality of batteries 14a and 14b are fully charged. If the charging operation is not complete, then monitoring of the plurality of batteries continues at step 26. A determination of whether the charging operation is complete may also depend on whether the battery charging system is operating in a normal mode or in a fault protection mode. If the voltage supplied by battery charger 12 is reduced in a fault protection mode, then the threshold used to determine whether the charging operation is complete may be reduced.

If the charging operation is complete, as evidenced by the monitored voltage across the plurality of batteries 14a and 14b, then the charging process is stopped at step 34.

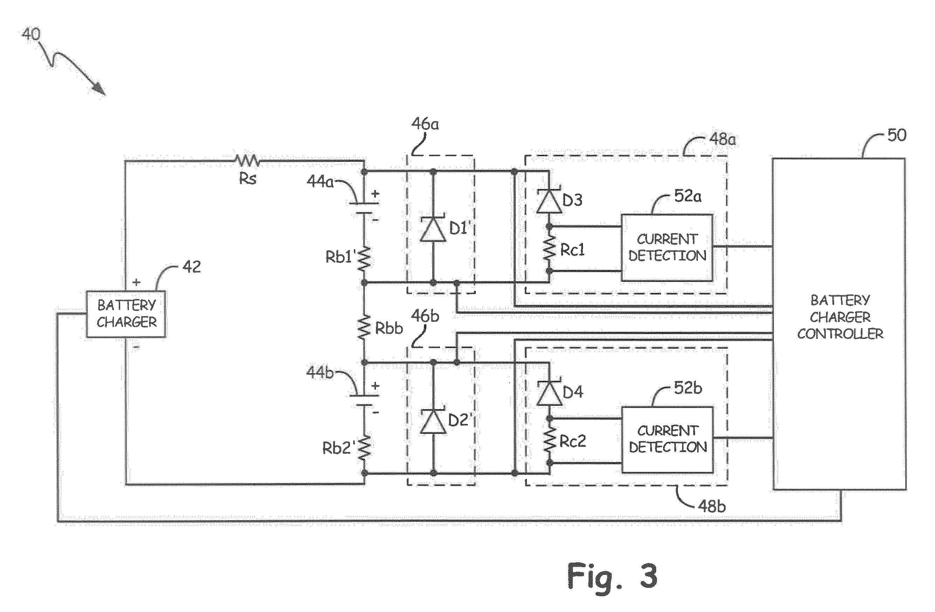

FIG. 3 is a circuit diagram of battery charging system 40 according to an embodiment of the present invention. Battery charging system 40 includes battery charger 42, batteries 44a and 44b, voltage regulation circuits 46a and 46b, fault detection circuits 48a and 48b, and battery charger controller 50. Line impedance between battery charger 42 and batteries 44a and 44b is represented by resistor Rs. Source impedances of batteries 44a and 44b are represented by resistors Rb1' and Rb2'. A bus bar impedance between batteries 44a and 44b is represented by resistor Rbb. In particular, the embodiment shown in FIG. 3 provides additional detail regarding circuitry used to provide fault detection and protection to associated batteries 44a and 44b.

Once again battery charger 42 is connected in series with batteries 44a and 44b. Voltage regulation circuits 46a and 46b are connected in parallel with batteries 44a and 44b, respectively, to regulate the voltage across batteries 44a and 44b to a value less than an overvoltage threshold. In the embodiment shown in FIG. 3, voltage regulation circuits 46a and 46b once again include Zener diodes D1' and D2' connected in parallel with batteries 44a and 44b, respectively

In contrast with the embodiment described with respect to FIG. 1, the embodiment shown in FIG. 3 utilizes fault detection circuits 48a and 48b to detect faults associated with voltage monitoring circuits 46a and 46b, respectively, and to provide protection of batteries 44a and 44b, respectively. Fault detection circuits 48a and 48b are connected in parallel with batteries 44a and 44b, respectively, and with voltage regulation circuits 46a and 46b, respectively. In particular, fault detection circuits 48a and 48b detect faults associated with voltage regulating circuits 46a and 46b, respectively that prevent the circuits from providing a conductive path bypassing batteries 44a and 44b, respectively. In addition, in the event of a fault, fault detection circuits 48a and 48b provide a conductive path that bypasses batteries 44a and 44b, respectively, to prevent an overvoltage from being applied to either battery.

In the embodiment shown in Fig. 3, fault detection circuit 48a includes Zener diode D3, current measuring resistor Rc1, and current detection circuit 52a. Likewise, fault detection circuit 48b includes Zener diode D4, current measuring resistor Rc2, and current detection circuit 52b. For example, with respect to battery 44a, during normal operation voltage regulation circuit 46a selectively creates a conductive path bypassing battery 44a to prevent an overvoltage from being applied to the battery. So long as voltage regulation circuit 46a operates without fault, no current flows through fault detection circuit 48a. However, if voltage regulation circuit 46a fails to create a conductive path bypassing battery 44a in response to an overvoltage condition, and the breakdown voltage of Zener diode D3 is reached then a conductive path is formed through Zener diode D3 and current sense resistor Rc1. Current detection circuit 52a detects current flowing through current sense resistor Rc1 and in response provides a signal to battery charger controller 50 indicating a detected fault in voltage regulation circuit 46a. In addition, the conductive path formed through Zener diode D3 and current sense resistor Rc1 provides a conductive path bypassing battery 44a. In this way, fault detection circuit 48a prevents an overvoltage from being applied to battery 44a, providing both fault detection and protection.

To ensure that during normal operation, current flows through voltage regulation circuits 46a and 46b, but not through fault detection circuits 48a or 48b, respectively, the breakdown voltage of Zener diodes D3 and D4 must be higher than the breakdown voltage of Zener diodes D1' and D2'. In one embodiment, because of the expectation that current will not flow through components associated with fault detection circuits 48a and 48b (e.g., through Zener diodes D3 and D4, and current sense resistors Rc1 and Rc2), these components and the wire associated with these components can be sized according to the expectation that they will not be required to handle large currents. In contrast, the expectation associated with the components associated with voltage regulation circuits 46a and 46b is that large currents will regularly be flowing through these components in order to regulate the voltage across batteries 44a and 44b, respectively. However, the trade-off associated with sizing the components associated with fault detection circuits 48a and 48b smaller than the components associated with voltage regulation circuits 46a and 46b is that the protection capability of fault detection circuits 48a and 48b is decreased.

In one embodiment, in response to a fault condition detected by fault detection circuit 48a or 48b, battery charger controller 50 may reduce the voltage provided by battery charger 42 to a level that will not result in overvoltage faults or may stop the charging operation altogether. Although fault detection circuits 48a and 48b provide a conductive path bypassing the battery to which the overvoltage is applied, and therefore will act to regulate the voltage across batteries 44a and 44b, it may be still be desirable to decrease the voltage supplied by battery charger 42 to prevent fault detection circuits 48a and 48b from being required to handle the full charging currents provided by battery charger 12. That is, in one embodiment it is more cost-effective to size components associated with fault detection circuits 48a and 48b to be capable of handling bypass currents for only a short period of time long enough to detect a fault condition and decrease the voltage supplied by the battery charger as opposed to regulating the voltage across the battery. However, in other embodiments components associated with fault detection circuits 48a and 48b may be sized to provide both fault detection and regulation, in which case battery charger controller 50 may maintain the full charging voltage supplied by battery charger 42. In this embodiment, battery charger controller 50 would then be responsible for detecting faults in fault detection circuits 48a and 48b based on the monitored voltage across batteries 44a and 44b, respectively, and would decrease the voltage supplied by battery charger 44 if a fault is detected within fault detection circuit 48a or 48b as indicated by the monitored voltage exceeding the breakdown voltage associated with Zener diodes D3 and D4.

Because of the presence of fault detection circuits 48a and 48b, battery charger controller 50 is not required to monitor the voltage across each battery for fault conditions. However, battery charger controller 50 may still monitor the voltage across each battery and/or the battery across the entire stack of batteries to determine whether the charging operation is complete. If battery charger controller 50 determines that the charging operation is complete, then battery charger controller 50 ends the charging operation. In other embodiments, battery charger controller 50 may not be required to monitor the voltages across each battery independently, but rather, may rely only on the feedback provided by fault detection circuits 48a and 48b.

The following are non-exclusive descriptions of possible embodiments of the present invention.

A battery charging system includes a battery charger, a first battery connected in series with the battery charger, a second battery connected in series with the first battery and the battery charger, and first and second voltage regulation circuits. The first voltage regulation circuit is connected in parallel with the first battery to provide a first conductive current path that bypasses the first battery in response to a voltage across the first battery exceeding a threshold value. The second voltage regulation circuit is connected in parallel with the second battery to provide a second conductive current path that bypasses the second battery in response to a voltage across the second battery exceeding a threshold value.

The battery charging system of the preceding paragraph can optionally include, additionally and/or alternatively, any one or more of the following features, configurations and/or additional components:
wherein the first voltage regulation circuit includes a Zener diode connected in parallel with the first battery, wherein the Zener diode has a breakdown voltage selected to provide the first conductive current path bypassing the first battery in response to the voltage across the first battery exceeding the threshold value;
a battery charger controller connected to monitor the voltage across the first battery and the voltage across the second battery and to provide commands to the battery charger based on the monitored voltages across the first and second batteries;
wherein the battery charger operates in a current-limited mode to provide charging current to the first and second batteries, wherein the battery charger controller turns Off the battery charger when based on the monitored voltages across the first and second batteries both batteries have been fully charged;
wherein the battery charger controller detects a fault in the first voltage regulation circuit when the monitored voltage across the first battery exceeds the threshold value and detects a fault in the second voltage regulation circuit when the monitored voltage across the second battery exceeds the threshold value;
wherein the battery charger controller controls the battery charger to reduce output voltage of the battery charger in response to a detected fault in either the first voltage regulation circuit or the second voltage regulation circuit;
wherein the battery charger controller controls the battery charger to stop the charging operation in response to a detected fault in either the first voltage regulation circuit or the second voltage regulation circuit;
further including a first fault detection circuit connected in parallel with the first battery and the first voltage regulation circuit that detects faults in the first voltage regulation circuit, wherein in response to a detected fault in the first voltage regulation circuit the first fault detection circuit provides a first backup conductive path that bypasses the first battery and generates a first output indicating the detected fault in the first voltage regulation circuit; and a second fault detection circuit connected in parallel with the second battery and the second voltage regulation circuit that detects faults in the second voltage regulation circuit, wherein in response to a detected fault in the second voltage regulation circuit the second fault detection circuit provides a second backup conductive path that bypasses the second battery and generates a second output indicating the detected fault in the second voltage regulation circuit;
wherein the first fault detection circuit includes a Zener diode having a breakdown voltage greater than the threshold value, a current sense resistor connected in series with the Zener diode, wherein the Zener diode and the current sense resistor are connected in parallel with the first battery, and a current detection circuit connected to detect current in the current sense resistor, wherein the Zener diode conducts current in response to the voltage across the first battery exceeding the threshold value without the first regulation circuit providing the first conductive path bypassing the first battery, wherein in response to current detected through the current sense resistor the current detection circuit provides the first output indicating a fault condition in the first voltage regulation circuit;
further including a battery charger controller connected to receive the first and second outputs provided by the first and second fault detection circuits and to provide control instructions to the battery charger, respectively, wherein in response to an indication of a fault condition in either the first or second voltage regulation circuits the battery charger controller decreases the output voltage provided by the battery charger.

A method of regulating the charging of first and second series-connected batteries includes operating in a normal mode in which voltages across the first and second batteries are regulated by first and second voltage regulation circuits connected in parallel with the first and second batteries, respectively, wherein the first and second voltage regulation circuits are non-conductive when the voltage across the first and second batteries, respectively, is less than a threshold value and conductive when the voltage across the first and second batteries, respectively, is greater than a threshold value, monitoring the voltage across the first battery and the voltage across the second battery, and operating in a protection mode in response to the monitored voltage across either the first or second battery exceeding a second threshold value, wherein output voltage of a battery charger is reduced in the protection mode.

The method of the preceding paragraph can optionally include, additionally and/or alternatively, any one or more of the following features, configurations and/or additional components;
wherein the second threshold value is greater than the first threshold value;
wherein the first threshold value is defined by the breakdown voltage of a first Zener diode connected in parallel with the first battery;
wherein the second threshold value is defined by a breakdown voltage of a second Zener diode connected in series with current sense resistor and together connected in parallel with the first battery and the first Zener diode, wherein operation in the protection mode is entered when current flow is detected through the current sense resistor.

A battery charging regulation and protection system for use with first and second series-connected batteries includes a first voltage regulation circuit connected in parallel with the first battery that provides a first conductive current path that bypasses the first battery in response to a voltage across the first battery exceeding a threshold value, a second voltage regulation circuit connected in parallel with the second battery that provides a second conductive current path that bypasses the second battery in response to a voltage across the second battery exceeding a threshold value, and a battery charger controller connected to monitor voltage across the first battery and voltage across the second battery, wherein the battery charger controller detects a fault in the first voltage regulation circuit and/or the second voltage regulation circuit if the voltage monitored across the first battery and/or the voltage monitored across the second battery exceeds a second threshold value;
wherein the second threshold value is equal to or greater than the first threshold value;
wherein the battery charger controller reduces the voltage across the series connected first and second batteries in response to a detected fault in either the first voltage regulation circuit or the second voltage regulation circuit;
wherein the first voltage regulation circuit includes a Zener diode connected in parallel with the first battery, wherein the Zener diode has a breakdown voltage selected to provide the first conductive current path bypassing the first battery in response to the voltage across the first battery exceeding the threshold value;
wherein the first voltage regulation circuit further includes a light-emitting diode connected in series with the Zener diode that provides a visual indication that the first voltage regulation circuit is working properly when current flows through the first conductive current path;
wherein the first voltage regulation circuit includes a plurality of Zener diodes connected in series with one another and in parallel with the first battery, wherein a number of Zener diodes employed and breakdown voltages of the plurality of Zener diodes is selected to provide the first conductive current path bypassing the first battery in response to the voltage across the first battery exceeding the threshold value.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A battery charging system comprising:
a battery charger (12);
a first battery (14a) connected in series with the battery charger;
a second battery (14b) connected in series with the first battery and the battery charger;
a first voltage regulation circuit (16a) connected in parallel with the first battery that provides a first conductive current path that bypasses the first battery in response to a voltage across the first battery exceeding a threshold value; and
a second voltage regulation circuit (16b) connected in parallel with the second battery that provides a second conductive current path that bypasses the second battery in response to a voltage across the second battery exceeding a threshold value.

2. The battery charging system of claim 1, wherein the first voltage regulation circuit includes a Zener diode (D1) connected in parallel with the first battery, wherein the Zener diode has a breakdown voltage selected to provide the first conductive current path bypassing the first battery in response to the voltage across the first battery exceeding the threshold value.

3. The battery charging system of claim 1, further including:
a battery charger controller (18) connected to monitor the voltage across the first battery and the voltage across the second battery and to provide commands to the battery charger based on the monitored voltages across the first and second batteries.

4. The battery charging system of claim 1, wherein the battery charger operates in a current-limited mode to provide charging current to the first and second batteries, wherein the battery charger controller turns Off the battery charger when based on the monitored voltages across the first and second batteries both batteries have been fully charged.

5. The battery charging system of claim 4, wherein the battery charger controller detects a fault in the first voltage regulation circuit when the monitored voltage across the first battery exceeds the threshold value and detects a fault in the second voltage regulation circuit when the monitored voltage across the second battery exceeds the threshold value.

6. The battery charging system of claim 5, wherein the battery charger controller controls the battery charger to reduce output voltage of the battery charger in response to a detected fault in either the first voltage regulation circuit or the second voltage regulation circuit, or to stop the charging operation in response to a detected fault in either the first voltage regulation circuit or the second voltage regulation circuit.

7. The battery charging system of claim 1, further including:
a first fault detection circuit (48a) connected in parallel with the first battery and the first voltage regulation circuit that detects faults in the first voltage regulation circuit, wherein in response to a detected fault in the first voltage regulation circuit the first fault detection circuit provides a first backup conductive path that bypasses the first battery and generates a first output indicating the detected fault in the first voltage regulation circuit; and
a second fault detection circuit (48b) connected in parallel with the second battery and the second voltage regulation circuit that detects faults in the second voltage regulation circuit, wherein in response to a detected fault in the second voltage regulation circuit the second fault detection circuit provides a second backup conductive path that bypasses the second battery and generates a second output indicating the detected fault in the second voltage regulation circuit.

8. The battery charging system of claim 7, wherein the first fault detection circuit includes:
a Zener diode (D3) having a breakdown voltage greater than the threshold value;
a current sense resistor (Rc1) connected in series with the Zener diode, wherein the Zener diode and the current sense resistor are connected in parallel with the first battery; and
a current detection circuit (52a) connected to detect current in the current sense resistor, wherein the Zener diode conducts current in response to the voltage across the first battery exceeding the threshold value without the first regulation circuit providing the first conductive path bypassing the first battery, wherein in response to current detected through the current sense resistor the current detection circuit provides the first output indicating a fault condition in the first voltage regulation circuit.

9. The battery charging system of claim 8, further including:
a battery charger controller (50) connected to receive the first and second outputs provided by the first and second fault detection circuits and to provide control instructions to the battery charger, respectively, wherein in response to an indication of a fault condition in either the first or second voltage regulation circuits the battery charger controller decreases the output voltage provided by the battery charger.

10. A method of regulating the charging of first and second series-connected batteries, the method comprising:
operating in a normal mode in which voltages across the first and second batteries are regulated by first and second voltage regulation circuits connected in parallel with the first and second batteries, respectively, wherein the first and second voltage regulation circuits are non-conductive when the voltage across the first and second batteries, respectively, is less than a threshold value and conductive when the voltage across the first and second batteries, respectively, is greater than a threshold value;
monitoring the voltage across the first battery and the voltage across the second battery; and
operating in a protection mode in response to the monitored voltage across either the first or second battery exceeding a second threshold value, wherein output voltage of a battery charger is reduced in the protection mode.

11. The method of claim 10, wherein the second threshold value is greater than the first threshold value, and wherein the first threshold value is defined by the breakdown voltage of a first Zener diode connected in parallel with the first battery.

12. The method of claim 11, wherein the second threshold value is defined by a breakdown voltage of a second Zener diode connected in series with current sense resistor and together connected in parallel with the first battery and the first Zener diode, wherein operation in the protection mode is entered when current flow is detected through the current sense resistor.

13. A battery charging regulation and protection system for use with first and second series-connected batteries, the battery charging system comprising:
a first voltage regulation circuit (16a) connected in parallel with the first battery that provides a first conductive current path that bypasses the first battery in response to a voltage across the first battery exceeding a threshold value;
a second voltage regulation circuit (16b) connected in parallel with the second battery that provides a second conductive current path that bypasses the second battery in response to a voltage across the second battery exceeding a threshold value; and
a battery charger controller (18) connected to monitor voltage across the first battery and voltage across the second battery, wherein the battery charger controller detects a fault in the first voltage regulation circuit and/or the second voltage regulation circuit if the voltage monitored across the first battery and/or the voltage monitored across the second battery exceeds a second threshold value.

14. The battery charging system of claim 13, wherein the first voltage regulation circuit includes a Zener diode connected in parallel with the first battery, wherein the Zener diode has a breakdown voltage selected to provide the first conductive current path bypassing the first battery in response to the voltage across the first battery exceeding the threshold value.

15. The battery charging system of claim 13, wherein the first voltage regulation circuit includes a plurality of Zener diodes connected in series with one another and in parallel with the first battery, wherein a number of Zener diodes employed and breakdown voltages of the plurality of Zener diodes is selected to provide the first conductive current path bypassing the first battery in response to the voltage across the first battery exceeding the threshold value.
